# EUROPÄISCHE PATENTSCHRIFT

(11) **EP 4 495 173 B1**
(45) Veröffentlichungstag und Bekanntmachung des Hinweises auf die Patenterteilung: **14.01.2026**
(21) Anmeldenummer: 23186719.3
(22) Anmeldetag: 20.07.2023
(51) Int. Cl.: C08J 11/14, C08J 11/16

(54) **VERFAHREN ZUM RECYCLEN VON MELAMIN-FORMALDEHYD-HARZ AUS WÄHREND DER HERSTELLUNG UND VERARBEITUNG VON HOLZWERKSTOFFPLATTEN ANFALLENDEN ABFÄLLEN**
PROCESS FOR RECYCLING MELAMINE-FORMALDEHYDE RESIN FROM WASTE RESULTING FROM THE PRODUCTION AND PROCESSING OF WOODEN BOARDS
PROCÉDÉ DE RECYCLAGE DE RÉSINE MÉLAMINE-FORMALDÉHYDE À PARTIR DE DÉCHETS PRODUITS PENDANT LA FABRICATION ET LE TRAITEMENT DE PANNEAUX EN BOIS

(43) Veröffentlichungstag der Anmeldung: 22.01.2025
(73) Patentinhaber: Flooring Technologies Ltd., Kalkara SCM1001 (MT)
(72) Erfinder: KALWA, Norbert, 32805 Horn-Bad Meinberg (DE); SEIDACK, Georg, 16909 Wittstock/Dosse (DE)
(74) Vertreter: Maikowski & Ninnemann Patentanwälte Partnerschaft mbB

(56) Entgegenhaltungen:
- GB-A- 1 290 022
- GB-A- 621 130
- JP-A- H0 657 203
- JP-A- H10 603
- JP-A- S59 190 245
- US-A- 5 356 938
- US-A- 5 676 749
- US-A1- 2019 047 181

## Beschreibung

Die vorliegende Erfindung betrifft ein Verfahren zum Recyclen bzw. Aufschluss von Melamin-Formaldehyd-Harz aus während der Herstellung, Verarbeitung und Rücknahme von Holzwerkstoffplatten anfallenden Abfällen.

In allen industriellen Bereichen stellt immer häufiger die Frage, wie Reststoff oder Produkte nach Ablauf ihrer Nutzung recycelt werden können. Dieses Thema hat durch die Vorgaben der EU, die zukünftig für sämtliche Produkte eine Wiederverwendung/ein Recyclen vorschreibt, einen deutlichen Aktualitätsschub erhalten. Auch ist festzustellen, dass durch die stark gestiegenen Preise der Rohstoffe, Recycling immer interessanter wird. Zusätzlich haben sich die Entsorgungskosten für Reststoffe stark erhöht. Zudem tritt auch mehr und mehr der Aspekt in den Vordergrund, dass alle Produzenten möglichst ökologisch produzieren möchten. Dies bedeutet, dass die Rohstoffe effektiv genutzt werden sollen, Emissionen vermieden werden sollen, wenig Abfall entstehen soll.

Besonders für Produkte, in denen Ausgangsstoffe auf Basis von Öl oder Gas enthalten sind, sind diese Entwicklungen relevant. Es handelt sich bei diesen Produkten meist um Kunststoffe, die auch mengenmäßig relevant sind. Während das Recycling von thermoplastischen Kunststoffen (Polyethylen, Polypropylen, Polyvinylchlorid) bereits seit Jahrzehnten geübte Praxis ist, hat sich der Recyclinggedanke bei Duroplasten/Duromeren (Phenolharze, Melaminharze, Harnstoffharze usw.) noch nicht durchsetzen können.

Dies hat u. A. mit der schwierig aufzubrechenden vernetzten Struktur der Duroplasten/Duromeren zu tun, die als besonderer Vorteil dieser Produkte gesehen wird, da sie dadurch sehr widerstandsfähig gegenüber thermischen oder chemischen Angriff angesehen werden. Aber auch mit den in der Vergangenheit teilweise sehr niedrigen Preisen der Ausgangsstoffe.

Erste Ansätze für ein Recycling wurden für Harnstoff-Formaldehydleime erarbeitet, die u. A. als Leim bei Holzwerkstoffen eingesetzt werden. Diese Leime sind nach Aushärtung sehr empfindlich gegenüber dem Angriff von Feuchte/Wasser bei höheren Temperaturen. Hier kann durch eine Hydrolyse der Werkstoff (z.B. Spanplatte) aufgeschlossen werden. Der hydrolysierte Leim verbleibt im Wesentlichen in den resultierenden Spänen und dient bei einer erneuten Herstellung eines Holzwerkstoffes als Basis für die zugegeben Leime. Man muss allerdings konstatieren, dass es bei diesem Verfahren eher um das Zurückgewinnen der Holzmatrix geht, als um eine Wiedergewinnung der Leimkomponenten.

Allerdings gab es auch in der Vergangenheit schon Aktivitäten, die zeigten, dass das Recycling von Duroplasten möglich sein sollte. In der DD 155779 wird beschrieben, wie durch ausgehärtete Melaminharze verschmutzte/verstopfte Produktionsanlagen gereinigt werden könnten.

In der EP 0612 793 B1 und US 5,356,938 wird beschrieben, wie ausgehärtetes Melaminharz (Fasern) aufgeschlossen und einer Nutzung zugeführt werden kann. Allerdings wird dabei nur auf Reststoffe aus der Formkörper-/Faserherstellung und Rücknahmen dieser Produkte verwiesen. Es werden ausgehärtete Melaminreste/-abfälle durch einen reduktiven Aufschluss mit Bisulfit, Hydrogensulfit oder Dithionat aufgearbeitet. Dabei entstehen zum allergrössten Teil Melaminmethylolsulfone. In der Schrift werden auch mögliche Verwendung für diese Sulfone beschrieben. Allerdings können die Sulfone lediglich in geringen Mengen in den Verwendungen genutzt werden. Ausserdem fällt auch, weil mit einem grossen Überschuss an Reduktionsmittel gearbeitet werden, viel Abfall in Form von anorganischen Schwefelsalzen an. Diese müssen nach Abtrennung entsorgt werden. Zudem liegt die Reaktionszeit bei mindestens acht Stunden.

Ein anderes Verfahren wird in der CN 111675827 beschrieben. Dort werden ausgehärtete Melaminharze aus verschiedenen Quellen in einem Gemisch aus Wasser und organischen Lösemitteln mit Hilfe von Säuren oder Lewissäuren unter Rückfluss erhitzt und aufgeschlossen. Dabei liegt das Verhältnis von Lösemittel zu Melaminabfall bei mindestens 80 zu 1. Auch hier sind relativ lange Reaktionszeiten bis vierundzwanzig Stunden angegeben. Auch wird die Reaktion unter Druck bei > 100°C durchgeführt. Neben dem anfallenden Melamin verbleiben grössere Mengen an Gemischen aus Lösemitteln, Säuren und Salzen. Diese Reste müssen wiederum entsorgt werden. All dies macht das Verfahren aufwändig, teuer und unter Recyclingaspekten fragwürdig.

CN 111 777 566 und CN 111 875 843 beschreiben ähnliche Verfahren zur Wiedergewinnung von Melamin aus Geschirr hergestellt aus Melamin-Formaldehyd-Harz. Hierfür wird das Geschirr zunächst zerkleinert und anschließend mit einem wässrigen organischen Lösungsmittel und einem sauren Katalysator, wie HCl, HNO₃, H₂SO₄, AlCl₃ und ähnliche, bei Temperaturen zwischen 80-150°C behandelt. Die erheblichen Mengen an organischen Lösemitteln in Kombination mit Wasser, die diese Verfahren brauchen, machen sie unter ökologischen Aspekten eher ungünstig. Zudem befindet sich in der wässrigen Phase auch noch eine Säure, die ebenfalls problematisch ist.

US 2019/0047181 A1 beschreibt die Aufarbeitung u.a. von mit Kohlenstofffasern verstärkten Polyimid, Polyurethan, Epoxyharz, Vinylester. JP S59 190245 A betrifft eine zementhaltige Zusammensetzung umfassend Sulfonsäure / Formaldehyd-Kondensat und Natriumsilikat. US 5,676,749 betrifft ebenfalls eine zementhaltige Zusammensetzung mit einem anorganischen Material, einem Kondensationsprodukt aus Melaminsulfonat und einem Härtungsbeschleuniger. GB 621 130 A bezieht sich auf ein synthetisches Bindemittel bestehend ausschließlich aus Melaminharz und verdampfter Sulfit-Cellulose-Flüssigkeit. JP H06 57203 A offenbart ein Copolymer herstellbar aus polymerisierbaren Silikonmakromer und zwei Arten von Vinylmonomeren, wobei eine Art des Vinylmonomers eine Phosphatgruppe enthält. JP H10 603 A betrifft ein Verfahren zur Neutralisierung von Holzwerkstoffplatten, wobei Natriumsulfit auf die Plattenoberfläche gesprüht wird. GB 1290022 offenbart ein Copolymer aus Tetrafluoroethylen mit einer Olefinkomponente ausgewählt aus Alkylvinylether, einer Mischung aus Propylen, Buten, Ethylen, Isobuten und einem Copolymer aus einem Aryloxyalkylvinylether-Monomer.

Das Recyclen von duroplastischen Harzen aus Holzwerkstoffen, Imprägnaten oder Laminaten wird bisher allerdings nicht beschrieben. Bei der Produktion und Weiterverarbeitung von Holzwerkstoffen fallen auf vielen Stufen der Wertschöpfungskette melaminharzhaltige Abfälle an.

Im Falle der Herstellung und Weiterverarbeitung von Holzwerkstoffplatten zu Fußbodendielen oder Möbelteilen werden u.a. imprägnierte Dekorpapiere, Overlaypapiere und Gegenzugpapiere mit Holzwerkstoffplatten verpresst. Diese Papiere werden mit duroplastischen Harzen (Harnstoffharz, Melaminharz) in Imprägnieranlagen bzw. Imprägnierkanälen imprägniert. Beim Anfahren der Anlagen, beim Produktwechsel, bei Fehlbedienungen oder bei durch technische Gründe auftretende Änderungen der Produktionsparameter, fallen in großen Mengen qualitativ nicht einwandfreie Imprägnate an. Diese werden entsorgt (z.B. durch thermische Nutzung) und stellen je nach Auftragsgröße, Dauer der Störung usw. einen durchschnittlichen Verlust von 3 - 8 % dar. Da ein moderner Imprägnierkanal mit Geschwindigkeiten von 80 m/min und mehr betrieben wird, resultieren daraus mehrere Millionen Quadratmeter Ausschuss pro Jahr. Üblicherweise enthalten Imprägnate ca. 50 Gew% Harz, wodurch auch erhebliche Mengen an Harnstoff-/Melaminharz verloren gehen. Zusätzlich fallen in Imprägnierungen auch Ausschussmengen von Harzen durch Besäumung der Imprägnate und Staubbildung an. Auch diese Reste werden entsorgt. Auch fallen in der Imprägnierung Restharze an, die heute entsorgt werden und auch diese über das Jahr erhebliche Tonnagen darstellen können.

Bei der Weiterverarbeitung der Imprägnate z.B. durch Verpressen mit Holzwerkstoffplatten fallen an den Pressen durch Abkratzvorrichtungen, die Imprägnatüberstände an Platten entfernen, Abfälle an und auch überlagerte Imprägnate, die nicht mehr in der Produktion genutzt werden können, werden entsorgt. All diese Reststoffe oder Abfälle haben den Vorteil, dass die Melaminharze noch nicht vollständig ausgehärtet sind, sodass ein Recycling problemloser möglich sein könnte.

Auch bei der Herstellung der Holzwerkstoffplatten (wie Spanplatten, Faserplatten) kommen häufig hoch mit Melamin verstärkte Leime zur Anwendung. Für diese Platten gilt das Gleiche wie für die Imprägnate, dass auf allen Wertschöpfungsstufen Abfälle anfallen, die entsorgt werden müssen.

Die sich aus der bisherigen Praxis der Abfallentsorgung ergebenen Nachteile sind insbesondere hohe Materialverluste, hohe Entsorgungskosten und Abfallprobleme.

Wie bereits angedeutet, wird durch die EU ein stimmiges Recyclingkonzept für alle Produkte erwartet. Dies bedeutet für die Holzwerkstoffindustrie, dass auch für melaminhaltige Produkte Recyclingwege benötigt werden Dies sollte sich nur für die Produkte gelten, die relevante Mengen an Melamin enthalten.

Der Erfindung liegt daher die technische Aufgabe zu Grunde ein Verfahren zu entwickeln, dass mit den Reststoffen und Abfällen aus den verschiedenen Wertschöpfungsstufen Imprägnierung und der Holzwerkstoffherstellung und Rücknahmen von Produkten ein Recycling des Melamins ermöglicht. Das Verfahren soll Produkte liefern, die für die Herstellung von Imprägnaten, Beschichtungen oder Holzwerkstoffen eingesetzt werden können. Dabei soll berücksichtigt werden, dass wegen der Recyclingkosten eher höherwertige Nutzung bevorzugt werden sollten. Ein besonderer Schwerpunkt sollte dabei sein, dass möglichst wenig oder gar kein Abfall anfällt. Außerdem soll das Verfahren eine möglichst schnell und wenig energieintensive Lösung sein.

Diese Aufgabe wird durch ein Verfahren mit den Merkmalen des Anspruchs 1 gelöst.

Entsprechend wird ein Verfahren zum Abbau oder Aufschluss bzw. Depolymerisation von Melamin-Formaldehyd-Harz aus während der Herstellung und Verarbeitung von Holzwerkstoffplatten anfallenden Abfallprodukten bereitgestellt. Das aufzuschließende Melamin-Formaldehyd-Harz ist dabei insbesondere in den in Produktionsanlagen zur Herstellung und Weiterverarbeitung von Holzwerkstoffplatten anfallenden Abfällen bzw. Abfallprodukten von Papierlagen und Holzwerkstoffträgerpatten gebunden.

Das vorliegende Verfahren umfasst die folgenden Schritte:
- Bereitstellen von während der Herstellung und Verarbeitung von Holzwerkstoffplatten anfallenden Abfallprodukten, die polykondensiertes Melamin-Formaldehyd-Harz enthalten,
- optionales Zerkleinern der Melamin-Formaldehyd-Harz-haltigen Abfallprodukte,
- Vermischen der Melamin-Formaldehyd-Harz-haltigen Abfallprodukte mit Wasser und Zugabe von mindestens einem Sulfinat oder Sulfinat-Analoga (als Reduktionsmittel),
- Erwärmen der wässrigen Mischung / Aufschlämmung aus Melamin-Formaldehyd-Harz -haltigen Abfallprodukten und mindestens einem Sulfinat oder Sulfinat-Analoga auf Temperaturen zwischen 60°C und 120°C, bevorzugt zwischen 80°C und 100°C, unter Reaktionskontrolle bis eine klare Lösung erhalten wird,
- Abtrennen von Fremdstoffen aus der klaren Lösung,
- Optionales weiteres Erwärmen der von Fremdstoffen gereinigten Mischung aus Melamin-Formaldehyd-Harzhaltigen Abfallprodukten und mindestens einem Sulfinat oder Sulfinat-Analoga bei Temperaturen zwischen 60°C und 120°C, bevorzugt zwischen 80°C und 110°C, unter Reaktionskontrolle bis kein polykondensiertes Melamin-Formaldehyd-Harz (mehr) in der Reaktionsmischung nachweisbar ist, und
- Abkühlen der Reaktionsmischung und Abtrennen von dabei als Salz ausfallendem Melaminsulfonat.

Es wird demnach ein Verfahren bereitgestellt, in welchem eine duroplastische Harzmatrix in den verschiedenen Produkten mit Hilfe von einem Sulfinat oder Sulfinat-Analog als Reduktionsmittel, insbesondere von Formamidinsulfinsäure (FAS) aufgeschlossen wird. Dabei werden die, mehr oder weniger vernetzten Melaminharze, die in den Reststoffen enthalten sind mit Hilfe des starken Reduktionsmittels aufgeschlossen. Die Reaktion wird in Wasser als Lösemittel durchgeführt. Das zu recyclende Material wird dabei unter Rückfluss gekocht. Besonders positiv ist bei diesem Verfahren, dass die Reaktion anders als beim Stand der Technik nach 90 bis 120 min. abgeschlossen ist. Auch ist das Verhältnis zwischen Reduktionsmittel und Melaminabfall deutlich niedriger. In der oben genannten EP liegt das Verhältnis bei ca. 4 zu 1. Mit FAS kann das Verhältnis auf 2 zu 1 reduziert werden.

Bei der Umsetzung von Melaminabfällen mit einem Sulfinat oder Sulfinat-Analoga, wie FAS, entsteht als Aufschlussprodukt Melaminsulfonat als Hauptprodukt, beim Einsatz von FAS als Ammoniumsalz mit der folgenden Struktur:

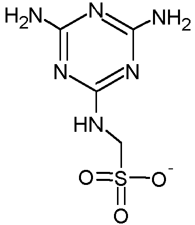

Die Ausbeute an Melaminsulfonat ist abhängig von dem aufzuschließenden Melamin-Formaldehyd-Harzhaltigen Abfallprodukt und liegt zwischen 70 und 95%, bevorzugt zwischen 75 und 90 % bezogen auf das verwendete Melamin-Formaldehyd-Harzhaltigen Abfallprodukt.

Die Aufschluss der Melamin-Formaldehyd-Harzhaltigen Abfallprodukten unter Ausbildung von im Wesentlichen einem Hauptprodukt war überraschend, da bei der aus dem Stand der Technik bekannten Verwendung von Disulfit als Reduktionsmittel typsicherweise Gemische aus Melamin, Melaminmethylolen und Melaminmethylolsulfonaten anfallen (EP 612 793 B1).

Die Störstoffe, die in den verschiedenen Reststoffen oder Produkten enthalten sind, können während oder nach der Reaktion leicht abgetrennt werden. Hier bietet sich z. B. das Abfiltrieren oder das Abschöpfen von aufschwimmenden Fasern usw. an. Dies kann bereits während der Aufschlussreaktion ( kontinuierlich ) oder am Ende erfolgen. Es muss allerdings berücksichtigt werden, dass z. B. die Fasern zu einem Mehrverbrauch an Reduktionsmittel führen können. Bei der Aufarbeitung von Harzen ist dies nicht nötig, wobei auch dort in einem Reinigungsschritt Verunreinigungen abgetrennt werden sollten.

Bei dem Aufschluss, der unter Rückfluss kochend erfolgt, wird die Melaminharzmatrix aufgebrochen und die wasserunlöslichen Reststoffe gehen langsam in Lösung. Dabei werden auch die, je nach Abfall/Produkt unterschiedlichen Hilfsstoffe entfernt. Es handelt sich dabei um üblicherweise in den Harzen befindlichen Hilfsstoffe wie Härter, Elastifizierungsmittel Korund, Glaskugeln, Pigmente usw. Es werden aber auch andere Harze oder Leime entfernt (Harnstoffharz/-leim). Dabei wird das Harnstoffharz vermutlich zunächst zu Harnstoff und Formaldehyd abgebaut. Der Harnstoff zersetzt sich dann weiter zu Ammoniak und Kohlendioxid, die jedoch kein Problem für die resultierenden Ammoniumsalze aus dem FAS und für die Wirkung als Härter darstellt.

Nach dem Abschluss der Reaktion und dem bereits angesprochenen Abtrennen von Verunreinigungen, wird die Reaktionslösung abgekühlt. Dabei fällt das Melaminsulfonat aus und kann von der Reaktionslösung abgetrennt, gewaschen und getrocknet werden. Sowohl das ausgefallene Melaminsulfonat als auch der Überstand können weiterverwendet werden.

Das vorliegende Verfahren ermöglicht somit eine (fast) vollständigen Recyclingkreislauf für Melaminharze. Dadurch können Rohstoffe eingespart werden, Abfälle vermieden werden und Kosten reduziert werden.

Das vorliegende Verfahren erfordert nicht den Einsatz von organischen Lösungsmitteln. Vielmehr werden wässrige Lösungen von Sulfinaten oder Sulfinat-Analoga, wie FAS, verwendet.

In einer Ausführungsform des vorliegenden Verfahrens umfassen die während der Herstellung und Verarbeitung von Holzwerkstoffplatten anfallenden Melamin-Formaldehyd-Harz haltigen Abfallprodukte überlagertes Melaminharz, Melaminharzstaub, Overlayimprägnate, Dekorimprägnate, Gegenzugimprägnate, Kraftpapierimprägnate unbeschichtete oder beschichtete Holzwerkstoffplatten, wie HDF-Platten, und/oder Laminate, wie Dünnlaminat, umfassen.

Unter einem überlagerten Melaminharz ist dabei ein Melamin-Formaldehydharz zu verstehen, welches bereits zumindest teilweise kondensiert ist und eine Trübung aufweist. Eine Überlagerung bei einem Melaminharz liegt insbesondere dann vor, wenn entweder die Viskosität stark angestiegen ist (Messung mit DIN-Becher 4mm gemäß EN ISO 2431:2011: Frischharz 20 -30 sec. überlagertes Harz: > 50 sec) oder das Harz trüb geworden ist. Melaminharzstaub fällt an verschiedenen Stellen der Verarbeitung von Imprägnaten und Holzwerkstoffplatten an, wie z.B. am Clipper und bei der Besäumung. Die dabei entstehenden Melaminharzstäube weisen eine Korngrösse > 50 µm. max. von 100-300 µm. Bei den Besäummaterial handelt es sich Schnipsel mit einer Breite von ca. 10 mm und variablen Längen je nach Effektivität der Abkratzer.

Overlayimprägnate, Dekorimprägnate, Gegenzugimprägnate und Kraftpapierimprägnate basieren auf dünnen Papierlagen, die mit einem Harz, bevorzugt Melamin-Formaldehyd-Harz vollständig oder teilweise durchtränkt (imprägniert) sind.

Entsprechend können sowohl teilweise imprägnierte, d.h. einseitig imprägnierte, Papiere als auch vollständig imprägnierte Papiere verwendet werden. Im Falle von einseitig imprägnierten Papieren ist lediglich die gesamte Fläche einer Seite des Papieres gleichmäßig mit einem Imprägnierharz versehen. Die Menge des aufgebrachten Harzes liegt in diesem Falle zwischen 30 und 70 Gew%, bevorzugt zwischen 40 und 60 Gew%, insbesondere bevorzugt 50 Gew% bezogen auf das Papiergewicht des Papiers. Demgegenüber wird im Falle eines vollständig imprägnierten Papiers eine Harzmenge von 80 - 400 Gew%, bevorzugt 90-120 Gew%, insbesondere bevorzugt 100-110 Gew% bezogen auf das Papiergewicht des Papiers aufgetragen.

Overlaypapiere sind dünne Papiere, welche typischerweise mit einem konventionellen Melaminharz getränkt wurden Es sind ebenfalls Overlaypapiere erhältlich, in denen abriebfeste Partikel, wie zum Beispiel Korundpartikel in das Harz des Overlays eingemischt sind oder auf das mit Harz benetzte Overlay aufgestreut, um die Abriebfestigkeit zu erhöhen. Für die Imprägnierung von Overlaypapieren werden Harzaufträge mit bis zu 400 Gew% Melaminharz verwendet.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten, muss das verwendete Papier eine geeignete Glätte und Dimensionsstabilität aufweisen und ebenfalls für eine Penetration einer notwendigen Kunstharzimprägnierung geeignet sein. Der Harzauftrag bei Dekorimprägnaten liegt bei 100 bis 120 Gew%.

Gegenzugpapiere sind hochwertige, imprägnierte Papier für den Einsatz als Gegenzugmaterial z. B. für einseitige Flächenfurnierungen und andere einseitige Beschichtungen, um Spannungen auszugleichen, die durch oberseitige Beschichtungen aufgebaut werden.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen. Sie werden im Wesentlichen als Kernlagen für HPL ( High pressure laminate ) und für CPL ( Continous pressed laminate ) verwendet. Bei HPL wird die Kernlage mit einem Phenolharz imprägniert. Der Harzauftrag bei Kraftpapierimprägnaten liegt bei 50 bis 120 Gew%. Diese werden vor allem bei Verwendung als Kernlage von CPL mit einem Gemisch aus Melamin- und Phenolharz imprägniert. Der Harzauftrag liegt dort bei 70 bis 100 Gew%.

Imprägnierungen können z.B. in einem Imprägnierbad, durch Walzen, durch Rasterwalzen, durch Aufrakeln oder auch durch Besprühen aufgebracht werden. In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 60 Gew% imprägniert. Nach dem Durchlauf einer Atemstrecke erfolgt eine Tauchimpägnierung mit einem Harz. In einem Rakelsystem / Quetschwalzenpaar wird überschüssiges Harz entfernt, und optional werden (im Falle einer Overlaypapierlage) abriebfeste Partikel auf die imprägnierte Papierlage gestreut. Es erfolgt ein Trocknungsschritt auf eine Restfeuchte von ca. 6%. Das Imprägnat kann dann in üblicher Weise mit einer Holzwerkstoffplatte z.B. in einer Kurztaktpresse verpresst werden.

Holzwerkstoffplatten, wie Holzspan- und Holzfaserplatten wie z.B. MDF-, HDF-Platten, werden aus Holzspänen oder Holzfasern hergestellt, die durch Zerspanung der Holzhackschnitzel in einem Zerspaner oder ein Zerfaserungsprozess der Holzhackschnitzel in einem Refiner gewonnen werden. Die mit in Holzfaserplatten verwendeten Holzfasern weisen eine Länge zwischen 1,5 mm und 20 mm und eine Dicke zwischen 0,05 mm und 1 mm auf. Die Größe von in Holzspanplatten verwendeten Holzspänen ist abhängig davon, ob sie in der Deck- oder Mittelschicht eingesetzt werden. In der Mittelschicht beginnen die Späne bei > 0,125 mm Siebweite, in der Deckschicht bei > 0,8 - 1,0 mm.

Bevorzugte Bindemittel für Holzwerkstoffplatten sind formaldehydhaltige Klebstoffe, wie Melamin-Formaldehyd-Harze und Harnstoff-Formaldehyd-Harze. Die in Holzwerkstoffplatten verwendete Bindemittelmenge liegt typischerweise in einem Bereich zwischen 5 bis 25 Gew%, bevorzugt 8 bis 20 Gew%, insbesondere bevorzugt zwischen 10 und 15 Gew%. In bestimmten Anwendungen kann die Bindemittelmenge in Holzwerkstoffplatten auch über 25 Gew%, wie z.B. bis zu 30 - 50 Gew% betragen.

Im Falle von beschichteten Holzwerkstoffplatten werden die oben angeführten Papierimprägnate auf die Holzwerkstoffplatten aufgelegt und verpresst. Typischerweise wird zunächst das imprägnierte Dekorpapier auf die Oberseite der Holzwerkstoffplatte aufgebracht. Auf das Dekorimprägnat folgt anschließend mindestens ein Overlayimprägnat. Das Gegenzugimprägnat wird unterseitig mit der Holzwerkstoffplatte verpresst. Ein typischer Aufbau einer beschichteten HDF-Platte ist von oben nach unten: Overlayimprägnat, Dekorimprägnat, HDF Träger, Gegenzugimprägnat.

Laminate sind Schichtstoffe aus miteinander verpressten Papierimprägnaten, die auf Trägerplatten aufkaschiert werden können.

Derzeitig im Stand der Technik bekannt sind z.B. flexible Laminate, bei denen der Schichtverbund mindestens eine imprägnierte Papierlage, wie z.B. ein Dekorimprägnat, mindestens eine Transparentpapierlage (Pergamin), z.B. mit Schwefelsäure behandeltes Pergamin, und/oder mindestens eine Kunststofffolienlage vorgesehen. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage. Die verschiedenen Lagen bzw. Schichten können mehrfach im Laminataufbau enthalten sein, sich abwechseln bzw. ihre Position vertauschen.

Die im Laminat verwendete Kunststofffolienlage besteht aus Polymeren, insbesondere aus Polypropylen (PP), Polyethylen (PE), Polyethylenterephthalat (PET), thermoplastisches Polyurethan (TPU) oder Polyurethan. Derartige Kunststofffolien werden insbesondere bei empfindlichen Oberflächen als Schutzfolien verwendet.

Die Melamin-Formaldehyd-Harz-haltigen Abfallprodukte können neben Zellulosefasern, Holzfasern, und Holzspänen auch anorganische abriebfeste Partikel, Glaskugeln, Farbpigmente, weitere Bindemittel, wie Harnstoffharze, und andere Additive enthalten. Die Zellulosefasern stammen dabei aus imprägnierten Papieren, wie den beschriebenen Dekor-, Overlay-, Gegenzugimprägnat. Anorganische Partikel, wie abriebfeste Partikel (Korund) sind in Overlayimprägnaten enthalten. Holzfasern stammen aus Holzwerkstoffplatten (wie HDF-, MDF-Platten) und Holzspäne aus Holzspanplatten. Farbpigmente sind bevorzugt in Dekorimprägnaten zu finden. Weitere Additive umfassen Flammschutzmittel, Härter, Elastifizierungsmittel, Wachse.

Die angeführten Feststoffe, die in den Melamin-Formaldehyd-Harz haltigen Abfallprodukten enthalten sind, fallen im Verlaufe des Aufschlussverfahrens als Fremdstoffe bzw. Verschmutzungen an und werden wie erwähnt, während des Aufschlusserfahrens abgetrennt.

Wie ersichtlich, unterscheiden sich die aufzuschließenden Melamin-Formaldehyd-Harz haltigen Abfallprodukte in ihrer Zusammensetzung, so dass optionale weitergehende Anpassungen und Modifikationen des vorliegenden Verfahrens möglich sind.

Während der Aufschluss von Melaminharzstaub keine weitergehende Zerkleinerung des Abfallproduktes vor Vermischen mit dem mindestens einem Sulfinat erfordert, ist dies bei den weiteren Abfallprodukten angezeigt.

So ist im Falle der Verwendung von Dekor-, Overlay-, Gegenzugimprägnat, beschichteten und unbeschichteten Holzwerkstoffplatten sowie Laminaten eine Zerkleinerung der Abfallprodukte jedoch notwendig. Entsprechend werden in einer Ausführungsform diese Melamin-Formaldehyd-Harz-haltigen Abfallprodukte auf eine Partikelgröße zwischen 0.1 und 10 mm, bevorzugt zwischen 0,5 und 3 mm zerkleinert. Der Aufschluss funktioniert am besten mit sehr fein gemahlenem Material mit einer Partikelgröße kleiner 3 mm.

Im Falle einer mit Overlay-, Dekor-, und/oder Gegenzugimprägnat beschichteten Holzwerkstoffplatte (wie Holzfaser- oder Holzspanplatte) ist es zudem von Vorteil die beschichtete Holzwerkstoffplatte zunächst nur vorzuzerkleinern (z.B. auf ein Format von 5 x 5 cm). Die vorzerkleinerten Stücke werden zunächst in einer Dampfatmosphäre behandelt, um das in der Holzwerkstoffplatte vorhandene zusätzliche Bindemittel (bevorzugt Harnstoff-Formaldehyd-Harz) zu hydrolysieren.

Der nach der Hydrolyse erhaltene Rückstand (bevorzugt aus den Imprägnaten und Holzfasern oder Holzspäne) wird abgetrennt und weiter zerkleinert und erst dann mit dem mindestens einen Sulfinat zum hydrolytischen Abbau des Melamin-Formaldehyd-Harzes gemäß dem vorliegenden Verfahren versetzt.

Das in den Abfallprodukten enthaltene und aufzuschließende Melamin-Formaldehyd-Harz weist ein molares Verhältnis von Melamin / Formaldehyd von 1/1,5 bis 1 / 2,5, bevorzugt von 1 / 1,6 bis 1 / 2,3, insbesondere bevorzugt von 1 / 1,6 bis 1 / 1,8 auf.

In einer Ausführungsform des vorliegenden Verfahrens ist das aufzuschließende polykondensierte Melamin-Formaldehyd-Harz in den Abfallprodukten noch nicht vollständig ausgehärtet; d.h. das Polykondensat ist noch nicht vollständig vernetzt. Dies trifft insbesondere auf überlagertes Harz und imprägnierte Papierlagen (die noch keinem Pressschritt ausgesetzt waren) zu.

In einer weiteren Ausführungsform des vorliegenden Verfahrens ist das aufzuschließende polykondensierte Melamin-Formaldehyd-Harz in den Abfallprodukten hingegen vollständig ausgehärtet. Dies trifft insbesondere auf verpresste unbeschichtete und beschichtete Holzwerkstoffplatten und Laminate zu.

Die unterschiedlichen Polymerisations- und Vernetzungszustände von Melamin-Formaldehyd-Harz seien im Folgenden kurz dargestellt.

Melamin und Formaldehyd reagieren zunächst unter Ausbildung von Methylolgruppen an den Aminogruppen des Melamins zu wasserlöslichen Monomerprodukten (siehe Schema I). Diese Melamin-Formaldehyd-Monomere werden auch als Melaminmethylole bezeichnet.

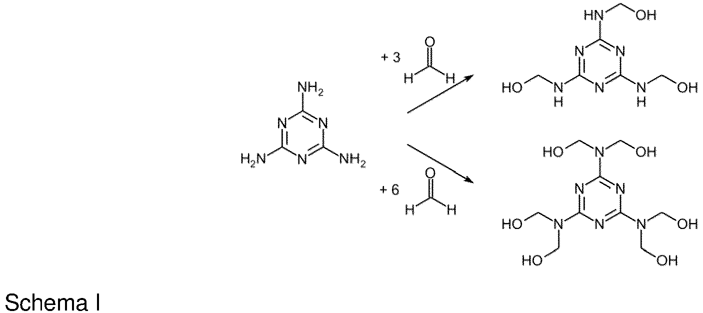

Die Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

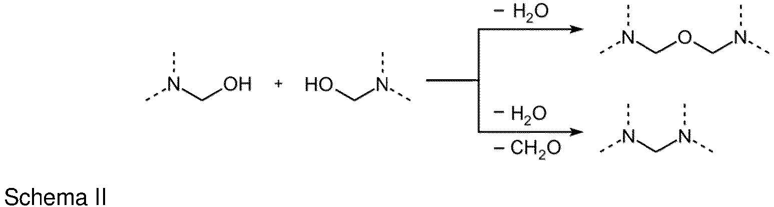

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

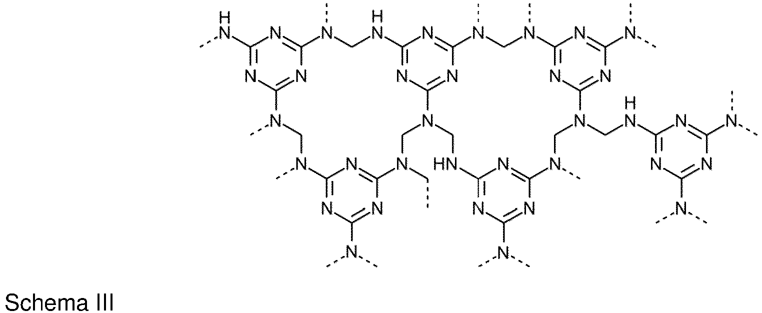

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Der Aufschluss eines noch nicht vollständig ausgehärteten Harzes (d.h. eines Harzes im teilvernetzten B-Zustand) ist aufgrund des geringeren Vernetzungsgrades des Harzes bevorzugt.

Wie bereits erwähnt, wird als Reduktionsmittel ein Sulfinat oder Sulfinat-Analoga verwendet. Als bevorzugtes Reduktionsmittel kommt das Sulfinat-Analoga Formamidinsulfinsäure (FAS) zum Einsatz.

Formamidinsulfinsäure (FAS), oder auch als Aminoiminomethansulfonsäure bezeichnet, ist eine weißer bis gelber geruchloser Feststoff, der in situ aus Thioharnstoff und Wasserstoffperoxid herstellbar ist. Die reduzierende Wirkung von FAS geht von dem bei Hydrolyse entstehenden Sulfinat-Ion aus. FAS wird heute in grossen Mengen zur Entfärbung von Recyclingpapier verwendet und steht deshalb in großen Mengen zur Verfügung.

In einer weiteren Ausführungsform des vorliegenden Verfahrens liegt das Gewichtsverhältnis von Reduktionsmittel zu Melamin-Formaldehyd-Harz haltigen Abfallprodukten zwischen 2 : 1 und 0,5 :1 , bevorzugt zwischen 1,5 :1 und 0,8 : 1. Die Zugabe von FAS erfolgt bevorzugt portionsweise, da FAS selbst in warmen Wasser nicht gut löslich ist, und somit eine vernünftige Durchmischung gesichert werden kann.

In einer bevorzugten Ausführungsform des vorliegenden Verfahrens beträgt die Reaktionszeit bis zum vollständigen Abbau des Melamin-Formaldehyd-Harzes zwischen 60 und 240 min, bevorzugt zwischen 90 und 120 min. Insbesondere diese relativ kurzen Reaktionszeiten waren angesichts der aus dem Stand der Technik bekannten wesentlich längeren Reaktionszeiten überraschend. Somit wird eine zeit- und damit kostengünstige Variante zum Recyclen vom Melamimharzabfällen zur Verfügung gestellt.

Wie oben erwähnt, wird in einem nächsten Schritt die wässrige Mischung / Aufschlämmung aus Melamin-Formaldehyd-Harz -haltigen Abfallprodukten und mindestens einem Sulfinat auf Temperaturen zwischen 60°C und 120°C, bevorzugt zwischen 80°C und 100°C, unter Reaktionskontrolle erwärmt, bis eine klare Lösung erhalten wird.

Vorliegend ist unter einer klaren Lösung zu verstehen, dass keine Trübung erkennbar ist (d.h. die Lösung ist durchsichtig), lediglich die als Verschmutzungen enthaltenden Feststoffe sind erkennbar.

Die erwähnten Fremdstoffe werden aus der klaren Lösung in einem Zwischenschritt abgetrennt. Das Abtrennen der in der Reaktionsmischung als Verschmutzungen enthaltenen Feststoffe erfolgt mittels Filtration, bevorzugt Heissfitration, und/oder Abschöpfen. So können die aus den Papierlagen oder Holzwerkstoffplatten freigesetzten und aufschwimmenden Fasern abgeschöpft werden und andere Partikel, wie Korund und/oder Glaskugeln, durch Heissfiltration abgetrennt werden.

Optional schließt sich ein weiteres Erwärmen der von Fremdstoffen gereinigten Reaktionsmischung aus Melamin-Formaldehyd-Harz haltigen Abfallprodukten und mindestens einem Sulfinat bei Temperaturen zwischen 60 und 120°C, bevorzugt zwischen 80 und 110°C, unter Reaktionskontrolle an, bis keine Melamin-Formaldehyd-Harz- Oligomere länger in der Reaktionsmischung nachweisbar sind.

De Reaktionskontrolle der Depolymerisation bzw. des hydrolytischen Abbaus des Melamin-Formaldehyd-Harzes erfolgt unter Verwendung von geeigneten analytischen Methoden, wie Dünnschichtchromatographie, HPLC oder Gaschromatographie. Im Falle der Dünnschichtchromatographie wird als geeignetes Laufmittel Wasser und/oder ein Alkohol, wie Methanol, Ethanol, oder eine Mischung davon verwendet. Bevorzugt ist die Verwendung von Methanol als Laufmittel.

Nach erfolgter Depolymerisation des Melamin-Formaldehyd-Harzes wird die Reaktionsmischung abgekühlt. Während des Abkühlens der Reaktionsmischung kommt es zum Ausfällen von monomeren Melaminsulfonaten (C₄H₇N₆SO₃⁻).

Insbesondere fällt bei Verwendung von FAS als Reduktionsmittels Melaminsulfonat als Ammoniumsalz aus.

Wird FAS als Reduktionsmittel verwendet, enthält der wässrige Überstand (nach dem Abtrennen des ausgefallenen Melaminsulfonats) eine Lösung aus Ammoniumsulfit und -sulfat. Diese bilden sich durch den Zerfall des FAS zu Harnstoff und Sulfoxylsäure, wobei der Harnstoff weiter zu Ammoniak und Kohlendioxid zerfällt. Die Sulfoxylsäure wird zu Sulfit und/oder Sulfat oxidiert. Diese Lösung (bzw. Überstand) kann als Härter für Melamin- und Harnstoffharze eingesetzt werden. Damit wird der gesamte Aufschluss verwertet.

Die (ausgefallenen und als Feststoff abgetrennten) Melaminsulfonatsalze als Härter für Harze, insbesondere Formaldehydharze, wie Melamin-Formaldehyd-Harze und Harnstoff-Formaldehydharze verwendet werden.

Bei Verwendung der Melaminsulfonaten als Härter, beträgt eine geeignete Menge an Melaminsulfonaten im zu härtenden Harz zwischen 0, 2 und 3 Gew%, bevorzugt zwischen 0,5 und 2,0 Gew%.

Die Erfindung wird im Folgenden anhand von Ausführungsbeispielen näher erläutert.

### Generelles:

Bei den Ausführungsbeispielen wurde der Reaktionsfortschritt über Dünnschichtchromatographie verfolgt. Dabei wurden zum Vergleich Melaminharze-/vorstufen mitlaufen gelassen, die eine Beurteilung des Abbaufortschrittes zu ließen. Es handelte sich dabei um Melamin und ein Melaminharz.

### Ausführungsbeispiel 1: Aufschluss Melaminreststoffe

Von Melaminharzstaub, der in einer Imprägnierung am Clipper und an der Besäumung angefallen war, wurden 100 g fest. (Molverhältnis Melamin/Formaldehyd: ca. 1/1,8 ) in einen 1000 ml Dreihalsrundkolben in dem sich 600 ml Wasser befanden überführt. Die wässige Lösung wurde unter Rühren bis zum Sieden erhitzt. Dann wurden 117 g FAS (Formamidinsulfinsäure in vier gleich grossen Portionen (jeweils ca. 30 g), jeweils im Abstand von 10 min zugegeben.

Das Gemisch wurde unter Rückfluss gekocht, wobei sich das Harz und das FAS langsam auflösten. Der Reaktionsfortgang wurde mit Dünnschichtchromatographie überwacht (Laufmittel: Methanol). Nachdem nach ca. zwei Stunden eine klare, gelbliche Lösung entstanden war, wurde heiss filtriert, um Verschmutzungen abzutrennen. Dann wurde die Reaktionslösung abgekühlt, das ausfallende Produkt über eine Saugnutsche abgesaugt, mit kaltem Wasser gewaschen und dann getrocknet.

Das weiße Produkt besteht nach Analyse ausschließlich aus dem Melaminsulfonat als Ammoniumsalz. Die Ausbeute betrug unter Berücksichtigung von ca. 10 Gew% Hilfsstoffen im Harz ( Elastifizierungsmittel, Härter usw. ) ca. 90 %.

### Ausführungsbeispiel 2: Aufschluss Melaminreststoff Overlay

Overlayimprägnate, die auf Grund einer Überlagerung nicht mehr in der Produktion eingesetzt werden konnten, wurden in einer Labormühle unter Kühlung zu Staub zermahlen. Die Overlays waren mit einem α-Cellulosepapier in einer Grammatur von 25 g/m² hergestellt worden. Neben dem Harz waren in dem Imprägnat auch ca. 25 g Korund/m² enthalten. Von diesem Overlayimprägnat wurden 100 g (Molverhältnis Harz: Melamin/Formaldehyd: ca. 1/1,8 ) in einen 1000 ml Dreihalsrundkolben überführt und mit 600 ml Wasser aufgeschlämmt. Die Lösung wurde dann unter Rühren bis zum Sieden erhitzt und dann mit vier gleichen Portionen 82 g FAS versetzt.

Das Gemisch wurde weiter unter Rückfluss gekocht. Nachdem eine klare Lösung entstanden war, wurde heiß filtriert, um Papierfasern, Korund usw. abzutrennen. Danach wurde weiter unter Rückfluss gekocht. Der Reaktionsfortgang wurde mit Hilfe von Dünnschichtchromatographie überwacht ( Laufmittel: Methanol). Nach ca. 2 h wurde die Reaktionslösung abgekühlt, das ausfallende Produkt über eine Saugnutsche abgesaugt, mit kaltem Wasser gewaschen und dann getrocknet.

Das weiße Produkt ist das Ammoniumsalz des Melaminsulfonats. Die Ausbeute betrug unter Berücksichtigung von ca. 20 Gew% Hilfsstoffen im Overlayimprägnat ( Elastifizierungsmittel, Korund, Härter usw. ) und den Cellulosefasern 89 %.

### Ausführungsbeispiel 3: Aufschluss Dekorimprägnat

Dekorimprägnate, die auf Grund einer Überlagerung nicht mehr in der Produktion eingesetzt werden konnten, wurden in einer Labormühle unter Kühlung zu Staub zermahlen. Es handelte sich dabei um Imprägnate, die eine Kernimprägnierung mit Harnstoffharz besaßen ( Harzauftrag: ca. 50 Gew% ) und zweite abdeckende Imprägnierung mit Melaminharz ( Harzauftrag: ca. 50 Gew%, Molverhältnis Melaminharz: Melamin/Formaldehyd: ca. 1/1,8). Das Papiergewicht der eingesetzten Imprägnate lag bei 80 g/m². Von diesem Dekorimprägnat wurden 100 g in einen 1000 ml Dreihalsrundkolben überführt und mit 600 ml Wasser versetzt.

Dann wurde unter Rühren bis zum Sieden erhitzt. Dann wurden 54 g FAS in vier gleich grossen Portionen zugegeben.

Das Gemisch wurde weiter ca. 1 h unter Rückfluss gekocht. Nachdem eine klare Lösung entstanden war, wurde heiß filtriert, um Papierfasern, Korund usw. abzutrennen. Danach wurde eine weitere Stunde unter Rückfluss gekocht. Der Reaktionsfortgang wurde mit Dünnschichtchromatographie überwacht (Laufmittel: Methanol). Danach wurde die Reaktionslösung abgekühlt, das ausfallende Produkt ( Melaminsulfonat als Ammoniumsalz ) über eine Saugnutsche abgesaugt, mit kaltem Wasser gewaschen und dann getrocknet.

Die Ausbeute des Melaminsulfonats als Ammoniumsalz betrug unter Berücksichtigung von ca. 10 Gew% Hilfsstoffen im Harz ( Elastifizierungsmittel, Härter usw. ), den Papierfasern und ca. 50 Gew% Harnstoffharz im Kern bei 78 %.

### Ausführungsbeispiel 4: Verwendung des Überstandes als Härter

Die gelbe Lösung aus dem Aufschluss aus dem Ausführungsbeispiel 1 wird als Härter eingesetzt. Sie besteht aus einem Gemisch aus Ammoniumsulfit und Ammoniumsulfat. Der Feststoff liegt bei ca. 20 %.

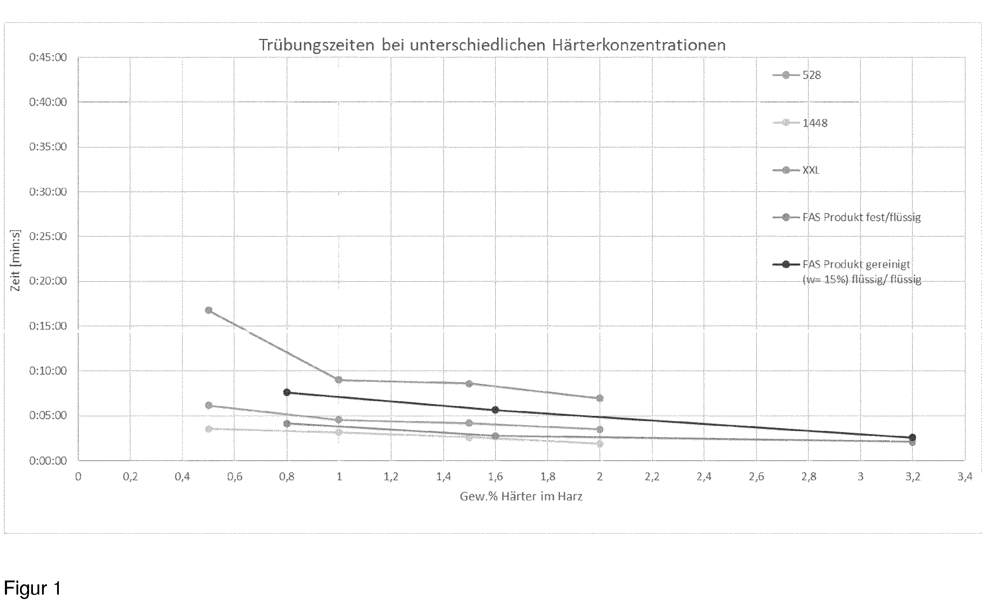

Es wird die Aushärtung des Melaminharzes Kauramin 796 im Vergleich zu anderen handelsüblichen Härtern (Härter 528, 1448 und XXL) bestimmt und verglichen (siehe Tabelle 1 und Diagramm der Figur 1). Der Überstand aus Ammoniumsulfit und Ammoniumsulfat wird in verschiedenen Konzentrationen bzw. Reinigungsstufen verwendet (FAS Produkt gereinigt flüssig/flüssig (w=15%); FAS Produkt fest/flüssig).

**Tabelle 1**

| Gelierzeiten Melaminharz BASF Kauramin 796 ( Feststoffgehalt ca. 63%) | | | | | | | |
|---|---|---|---|---|---|---|---|
| Härter flüssig / flüssig Gew. % | 528 | 1448 | XXL | FAS Produkt gereinigt (w= 15%) flüssig/ flüssig | Zeit | FAS Produkt fest/flüssig | Zeit |
| 0,5 | 06:08 | 03:31 | 16:44 | 0,8 | 07:36 | 0,8 | 04:07 |
| 1,0 | 04:30 | 03:08 | 08:58 | 1,6 | 05:37 | 1,6 | 02:44 |
| 1,5 | 04:10 | 02:35 | 08:34 | 3,2 | 02:32 | 3,2 | 02:04 |
| 2,0 | 03:28 | 01:51 | 06:55 | | | | |

Wie die Daten der Tabelle 1 und die dazu gehörigen Härterkurven im Diagramm der Figur 1 zeigen ist der Recyclat-Härter aus dem Überstand (FAS Produkt) ähnlich reaktiv wie die eingesetzten Standardhärter und deutlich reaktiver als der latente Härter XXL.

### Ausführungsbeispiel 5: Verwendung von Melaminsulfonat als Härter

Das weiße Produkt aus dem Ausführungsbeispiel 1 wird in warmem Wasser gelöst ( 50°C, 20%ige Lösung). Es enthält das Ammoniumsalz des Melaminsulfonats. Das Melaminsulfonat wird in verschiedenen Konzentrationen verwendet (Sulfonatprodukt w = 20% flüssig/flüssig; Sulfonatprodukt fest / flüssig).

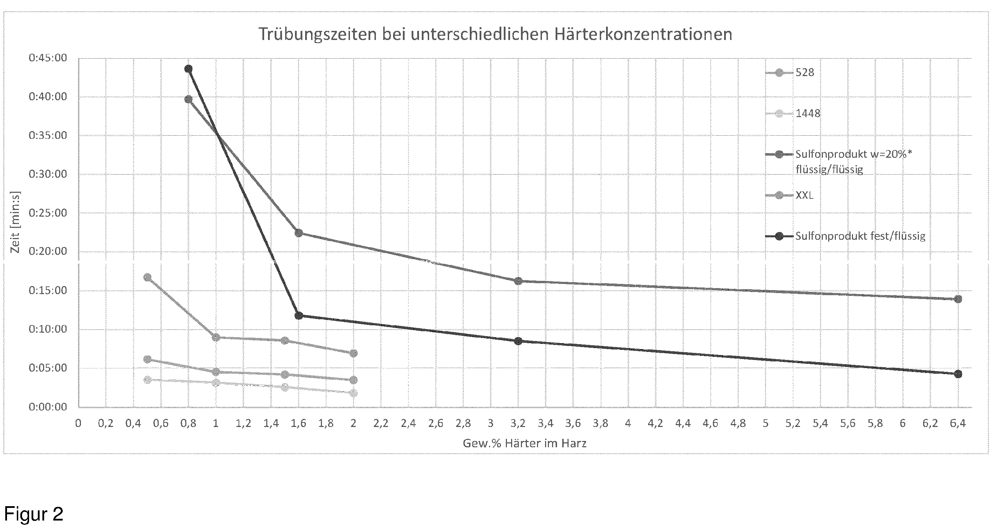

Die klare Lösung wird als Härter für Melaminharze eingesetzt. Dabei wird das Aushärtungsverhalten mit bereits im Einsatz befindlichen Härtern (Härter 528, 1448 und XXL) verglichen (siehe Tabelle 2 und Diagramm der Figur 2).

**Tabelle 2**

| Gelierzeiten Melaminharz BASF Kauramin 796 ( Feststoffgehalt ca. 63%) | | | | | | | |
|---|---|---|---|---|---|---|---|
| Härter flüssig / flüssig Gew. % | 528 | 1448 | XXL | Sulfonatprodukt w=20%* flüssig/flüssig | Zeit | Sulfonatprodukt fest/flüssig | Zeit |
| 0,5 | 06:08 | 03:31 | 16:44 | 0,8 | 39:42 | 0,8 | 43:37 |
| 1,0 | 04:30 | 03:08 | 08:58 | 1,6 | 22:24 | 1,6 | 11:48 |
| 1,5 | 04:10 | 02:35 | 08:34 | 3,2 | 16:15 | 3,2 | 08:30 |
| 2,0 | 03:28 | 01:51 | 06:55 | 6,4 | 13:54 | 6,4 | 04:15 |

Wie die Härterkurven zeigen ist das Ammoniumsalz des Melaminsulfonats ein eher latenter Härter einzustufen ( ähnlich wie XXL ). Diese Härter werden heute bevorzugt eingesetzt, weil bei deren Einsatz Voraushärtungen im Prozess vermieden werden sollen. Dieser Härter kann natürlich in Kombination mit anderen Härtern eingesetzt werden, um eine maßgeschneiderte Reaktivität der Harze in denen er eingesetzt wird zu erreichen.

## Patentansprüche

1. Verfahren zum Abbau von Melamin-Formaldehyd-Harz aus während der Herstellung und Verarbeitung von Holzwerkstoffplatten anfallenden Abfallprodukten
**gekennzeichnet durch** die folgenden Schritte
- Bereitstellen von während der Herstellung und Verarbeitung von Holzwerkstoffplatten anfallenden Abfallprodukten, die polykondensiertes Melamin-Formaldehyd-Harz enthalten,
- optionales Zerkleinern der Melamin-Formaldehyd-Harz-haltigen Abfallprodukte,
- Vermischen der Melamin-Formaldehyd-Harz-haltigen Abfallprodukte mit Wasser und Zugabe von mindestens einem Sulfinat oder Sulfinat-Analoga,
- Erwärmen der wässrigen Mischung / Aufschlämmung aus Melamin-Formaldehyd-Harz -haltigen Abfallprodukten und mindestens einem Sulfinat oder Sulfinat-Analoga auf Temperaturen zwischen 60°C und 120°C, bevorzugt zwischen 80°C und 100°C, unter Reaktionskontrolle bis eine klare Lösung erhalten wird,
- Abtrennen von Fremdstoffen aus der klaren Lösung,
- optionales weiteres Erwärmen der von Fremdstoffen gereinigten Mischung aus Melamin-Formaldehyd-Harzhaltigen Abfallprodukten und mindestens einem Sulfinat bei Temperaturen zwischen 60°C und 120°C, bevorzugt zwischen 80°C und 110°C, unter Reaktionskontrolle bis kein polykondensiertes Melamin-Formaldehyd-Harz (mehr) in der Reaktionsmischung nachweisbar ist, und
- Abkühlen der Reaktionsmischung und Abtrennen von dabei als Salz ausfallendem Melaminsulfonat.

2. Verfahren nach Anspruch 1, **dadurch gekennzeichnet, dass** die während der Herstellung und Verarbeitung von Holzwerkstoffplatten anfallenden Melamin-Formaldehyd-Harz haltigen Abfallprodukte überlagertes Melaminharz, Melaminharzstaub, Overlayimprägnate, Dekorimprägnate, unbeschichtete oder beschichtete Holzwerkstoffplatten, wie HDF-Platten, und/oder Laminate, wie Dünnlaminat, umfassen.

3. Verfahren nach einem der vorhergehenden Ansprüche, **dadurch gekennzeichnet, dass** die Melamin-Formaldehyd-Harz-haltigen Abfallprodukte Zellulosefasern, Holzfasern, anorganische abriebfeste Partikel, Glaskugeln, Farbpigmente, weitere Bindemittel und andere Additive enthalten.

4. Verfahren nach einem der vorhergehenden Ansprüche, **dadurch gekennzeichnet, dass** das in den Abfallprodukten enthaltene Melamin-Formaldehyd-Harz ein molares Verhältnis von Melamin / Formaldehyd von 1/1,5 bis 1 / 2,5, bevorzugt von 1 / 1,6 bis 1 / 2,3, insbesondere bevorzugt 1 / 1,6 bis 1/1,8 aufweist.

5. Verfahren nach einem der vorhergehenden Ansprüche, **dadurch gekennzeichnet, dass** die Melamin-Formaldehyd-Harz haltigen Abfallprodukte auf eine Partikelgröße zwischen 0.1 und 10 mm, bevorzugt zwischen 0,5 und 3 mm zerkleinert werden.

6. Verfahren nach einem der vorhergehenden Ansprüche, **dadurch gekennzeichnet, dass** das mindestens eine Sulfinat oder Sulfinat-Analoga als Feststoff zu der wässrigen Lösung/ Aufschlämmung aus Melamin-Formaldehyd-Harz haltigen Abfallprodukte zugegeben wird.

7. Verfahren nach einem der vorhergehenden Ansprüche, **dadurch gekennzeichnet, dass** das mindestens eine Sulfinat aus Formamidinsulfinsäure (FAS) herstellbar ist.

8. Verfahren nach einem der vorhergehenden Ansprüche, **dadurch gekennzeichnet, dass** das Verhältnis von Reduktionsmittel zu Melamin-Formaldehyd-Harz haltigen Abfallprodukten zwischen 2 : 1 und 0,5 :1 , bevorzugt zwischen 1,5 :1 und 0,8 : 1 liegt.

9. Verfahren nach einem der vorhergehenden Ansprüche, **dadurch gekennzeichnet, dass** die Reaktionszeit bis zum vollständigen Abbau des Melamin-Formaldehyd-Harzes zwischen 60 und 240 min, bevorzugt zwischen 90 und 120 min beträgt.

10. Verfahren nach einem der vorhergehenden Ansprüche, **dadurch gekennzeichnet, dass** das Abtrennen der in der Reaktionsmischung enthaltenen Fremdstoffen mittels Filtration, bevorzugt Heissfitration, und/oder Abschöpfen erfolgt.

11. Verfahren nach einem der vorhergehenden Ansprüche, **dadurch gekennzeichnet, dass** die Reaktionskontrolle des Abbaus des Melamin-Formaldehyd-Harzes unter Verwendung von geeigneten analytischen Methoden, wie Dünnschichtchromatographie, HPLC oder Gaschromatographie, erfolgt.

12. Verfahren nach einem der vorhergehenden Ansprüche, **dadurch gekennzeichnet, dass** das nach Abkühlen der Reaktionsmischung als Salz ausfallende Melaminsulfonat ein Ammoniumsalz ist.

13. Verfahren nach einem der vorhergehenden Ansprüche, **dadurch gekennzeichnet, dass** der nach dem Ausfallen und Abtrennen des Melaminsulfonatsalzes anfallende Überstand Ammoniumsulfat (NH₄)₂SO₄ und Ammoniumsulfit (NH₄)₂SO₃ enthält.

14. Verwendung der in einem Verfahren nach einem der vorhergehenden Ansprüche erhaltenen Melaminsulfonatsalze als Härter für Harze, insbesondere Formaldehydharze, wie Melamin-Formaldehyd-Harze und Harnstoff-Formaldehydharze.

15. Verwendung des in einem Verfahren nach einem der Ansprüche 1-13 nach dem Ausfallen und Abtrennen des Melaminsulfonatsalzes anfallenden Überstandes enthaltend Ammoniumsulfat (NH₄)₂SO₄ und Ammoniumsulfit (NH₄)₂SO₃ als Härter für Harze, insbesondere als Härter für Formaldehydharze, wie Melamin-Formaldehyd-Harze und Harnstoff-Formaldehydharze.

## Claims

1. Process for the degradation of melamine-formaldehyde resin from waste products generated during the manufacture and processing of wood-based panels
**characterized by** the following steps
- Providing waste products generated during the manufacture and processing of wood-based panels that contain polycondensed melamine-formaldehyde resin,
- Optional shredding of waste products containing melamine-formaldehyde resin,
- Mixing the melamine-formaldehyde-resin-containing waste products with water and adding at least one sulfinate or sulfinate analog,
- Heating the aqueous mixture / slurry of melamine-formaldehyde resin-containing waste products and at least one sulfinate or sulfinate analog to temperatures between 60°C and 120°C, preferably between 80°C and 100°C, under reaction control until a clear solution is obtained,
- Separating foreign substances from the clear solution,
- optional further heating of the mixture of melamine-formaldehyde resin-containing waste products purified from foreign substances and at least one sulfinate at temperatures between 60°C and 120°C, preferably between 80°C and 110°C, under reaction control until no polycondensed melamine-formaldehyde resin is detectable (any more) in the reaction mixture, and
- Cooling of the reaction mixture and separation of the melamine sulfonate that precipitates as a salt.

2. Process according to claim 1, **characterized in that** the melamine-formaldehyde-resin-containing waste products produced during the manufacture and processing of wood-based panels comprise overstored melamine resin, melamine resin dust, overlay impregnates, decorative impregnates, uncoated or coated wood-based panels, such as HDF panels, and/or laminates, such as thin laminate.

3. Process according to one of the preceding claims, **characterized in that** the melamine-formaldehyde-resin-containing waste products contain cellulose fibres, wood fibres, inorganic abrasion-resistant particles, glass beads, colour pigments, further binders and other additives.

4. Process according to one of the preceding claims, **characterized in that** the melamine-formaldehyde resin contained in the waste products has a molar ratio of melamine/formaldehyde of 1/1.5 to 1 / 2.5, preferably of 1 / 1.6 to 1 / 2.3, more preferably 1 / 1.6 to 1/1.8.

5. Process according to one of the preceding claims, **characterized in that** the melamine-formaldehyde-resin-containing waste products are comminuted to a particle size of between 0.1 and 10 mm, preferably between 0.5 and 3 mm.

6. Process according to one of the preceding claims, **characterized in that** the at least one sulfinate or sulfinate analogues is added as a solid to the aqueous solution/slurry of melamine-formaldehyde resin-containing waste products.

7. Process according to one of the preceding claims, **characterized in that** the at least one sulfinate can be obtained from formamidine sulfinic acid (FAS).

8. Process according to one of the preceding claims, **characterized in that** the ratio of reducing agent to melamine-formaldehyde-resin-containing waste products is between 2:1 and 0.5:1 , preferably between 1.5:1 and 0.8:1.

9. Process according to one of the preceding claims, **characterized in that** the reaction time until complete degradation of the melamine-formaldehyde resin is between 60 and 240 min, preferably between 90 and 120 min.

10. Process according to one of the preceding claims, **characterized in that** the separation of the foreign substances contained in the reaction mixture is carried out by means of filtration, preferably hot filtration, and/or skimming.

11. Process according to one of the preceding claims, **characterized in that** the reaction control of the degradation of the melamine-formaldehyde resin is carried out using suitable analytical methods, such as thin-layer chromatography, HPLC or gas chromatography.

12. Process according to one of the preceding claims, **characterized in that** the melamine sulfonate precipitating as a salt after cooling of the reaction mixture is an ammonium salt.

13. Process according to one of the preceding claims, **characterized in that** the supernatant obtained after precipitation and separation of the melamine sulfonate salt contains ammonium sulfate (NH₄)₂SO₄ and ammonium sulfite (NH₄)₂SO₃.

14. Use of the melamine sulfonate salts obtained in a process according to one of the preceding claims as hardeners for resins, in particular formaldehyde resins, such as melamine-formaldehyde resins and urea-formaldehyde resins.

15. Use of the supernatant containing ammonium sulfate (NH₄)₂SO₄ and ammonium sulfite (NH₄)₂SO₃ obtained in a process according to any one of claims 1-13 after precipitation and separation of the melamine sulfonate salt as a hardener for resins, in particular as a hardener for formaldehyde resins, such as melamine-formaldehyde resins and urea-formaldehyde resins.

## Revendications

1. Procédé de décomposition de résine mélamine-formaldéhyde à partir des déchets produits lors de la fabrication et du traitement de panneaux en matériau dérivé du bois
**caractérisé par** les étapes suivantes
- la fourniture de déchets produits lors de la fabrication et du traitement de panneaux en matériau dérivé du bois qui contiennent de la résine mélamine-formaldéhyde polycondensée,
- le broyage éventuel des déchets contenant de la résine mélamine-formaldéhyde,
- le mélange des déchets contenant de la résine mélamine-formaldéhyde avec de l'eau et l'ajout d'au moins un sulfinate ou analogue de sulfinate,
- le chauffage du mélange aqueux/de la bouillie de déchets contenant de la résine mélamine-formaldéhyde et d'au moins un sulfinate ou analogue de sulfinate à des températures comprises entre 60 °C et 120 °C, de préférence entre 80 °C et 100 °C, sous contrôle de réaction jusqu'à ce qu'une solution claire soit obtenue,
- la séparation des substances étrangères de la solution claire,
- le chauffage supplémentaire éventuel du mélange de déchets contenant de la résine mélamine-formaldéhyde débarrassé de substances étrangères et d'au moins un sulfinate à des températures comprises entre 60 °C et 120 °C, de préférence entre 80 °C et 110 °C, sous contrôle de réaction jusqu'à ce qu'aucune résine mélamine-formaldéhyde polycondensée ne soit (plus) détectable dans le mélange réactionnel, et
- le refroidissement du mélange réactionnel et la séparation du sulfonate de mélamine se précipitant sous forme de sel.

2. Procédé selon la revendication 1, **caractérisé en ce que** les déchets contenant de la résine mélamine-formaldéhyde produits lors de la fabrication et du traitement de panneaux en matériau dérivé du bois englobent la résine mélamine superposée, la poussière de résine mélamine, les produits imprégnés overlay, les produits imprégnés décoratifs, les panneaux en matériau dérivé du bois non revêtus ou revêtus, tels que les panneaux HDF, et/ou les stratifiés, tels que le stratifié fin.

3. Procédé selon l'une quelconque des revendications précédentes, **caractérisé en ce que** les déchets contenant de la résine mélamine-formaldéhyde contiennent des fibres de cellulose, des fibres de bois, des particules inorganiques résistantes à l'abrasion, des billes de verre, des pigments de couleur, d'autres liants et d'autres additifs.

4. Procédé selon l'une quelconque des revendications précédentes, **caractérisé en ce que** la résine mélamine-formaldéhyde contenue dans les déchets présente un rapport molaire de mélamine/formaldéhyde de 1/1,5 à 1/2,5, de préférence de 1/1,6 à 1/2,3, de manière particulièrement préférée de 1/1,6 à 1/1,8.

5. Procédé selon l'une quelconque des revendications précédentes, **caractérisé en ce que** les déchets contenant de la résine mélamine-formaldéhyde sont broyés à une taille de particule comprise entre 0,1 et 10 mm, de préférence entre 0,5 et 3 mm.

6. Procédé selon l'une quelconque des revendications précédentes, **caractérisé en ce que** l'au moins un sulfinate ou analogue de sulfinate est ajouté en tant que solide à la solution aqueuse/bouillie de déchets contenant de la résine mélamine-formaldéhyde.

7. Procédé selon l'une quelconque des revendications précédentes, **caractérisé en ce que** l'au moins un sulfinate peut être obtenu à partir d'acide formamidine sulfinique (FAS).

8. Procédé selon l'une quelconque des revendications précédentes, **caractérisé en ce que** le rapport d'agents réducteurs aux déchets contenant de la résine mélamine-formaldéhyde est compris entre 2 : 1 et 0,5 : 1, de préférence entre 1,5 : 1 et 0,8 : 1.

9. Procédé selon l'une quelconque des revendications précédentes, **caractérisé en ce que** le temps de réaction jusqu'à la décomposition complète de la résine mélamine-formaldéhyde est compris entre 60 et 240 min, de préférence entre 90 et 120 min.

10. Procédé selon l'une quelconque des revendications précédentes, **caractérisé en ce que** la séparation des substances étrangères contenues dans le mélange réactionnel s'effectue par filtration, de préférence par filtration à chaud, et/ou par écumage.

11. Procédé selon l'une quelconque des revendications précédentes, **caractérisé en ce que** le contrôle de réaction de la décomposition de la résine mélamine-formaldéhyde est réalisé à l'aide de méthodes analytiques appropriées, telles que la chromatographie en couche mince, la HPLC ou la chromatographie en phase gazeuse.

12. Procédé selon l'une quelconque des revendications précédentes, **caractérisé en ce que** le sulfonate de mélamine précipité sous forme de sel après refroidissement du mélange réactionnel est un sel d'ammonium.

13. Procédé selon l'une quelconque des revendications précédentes, **caractérisé en ce que** le surnageant produit après la précipitation et séparation du sel de sulfonate de mélamine contient du sulfate d'ammonium (NH₄)₂SO₄ et du sulfite d'ammonium (NH4)2SO3.

14. Utilisation des sels de sulfonate de mélamine obtenus dans un procédé selon l'une quelconque des revendications précédentes comme durcisseur pour les résines, en particulier les résines formaldéhyde, telles que les résines mélamine-formaldéhyde et les résines urée-formaldéhyde.

15. Utilisation du surnageant produit dans un procédé selon l'une quelconque des revendications 1 à 13 après la précipitation et séparation du sel de sulfonate de mélamine contenant du sulfate d'ammonium (NH₄)₂SO₄ et du sulfite d'ammonium (NH4)2S03 comme durcisseur pour les résines, en particulier comme durcisseur pour les résines formaldéhyde, telles que les résines mélamine-formaldéhyde et les résines urée-formaldéhyde.
